# EUROPEAN PATENT APPLICATION

(11) **EP 1 707 912 A1**
(43) Date of publication of application: **04.10.2006**
(21) Application number: 05075766.5
(22) Date of filing: 01.04.2005
(51) Int. Cl.: F28F 1/12, F28D 1/02, A01G 9/24

(54) **Heat exchanger and greenhouse**

(71) Applicant: Fiwihex B.V., 7604 BK Almelo (NL)
(72) Inventor: Van Andel, Eleonoor, 7548 RB Boekelo (NL)
(74) Representative: Schumann, Bernard Herman Johan

(57) **Abstract**

Heat exchanger (1) for exchanging heat between a fluid and a gas, in particular water and air, the heat exchanger (1) comprising:
- a housing (2) having an gas inlet (3) and an gas outlet (4);
- an elongate fluid inlet manifold (6) and an elongate fluid outlet manifold (7) interconnected by a plurality of tubes (8) arranged in the housing (2) in between the gas inlet (3) and gas outlet (4);
- a wire mesh (10) intertwined with the tubes (8); and
- driving means (5) for driving the gas through the housing (2), wherein the main flow direction of the fluid is opposite to the main flow direction of the gas.

The invention further relates to a greenhouse (11).

## Description

The invention relates to a heat exchanger for exchanging heat between a fluid and a gas, in particular water and air.

Commercial greenhouses are cooled during sunshine by opening windows in the roof. This is effective not only by replacing hot inside air by cooler outside air, but also by allowing the plant culture to evaporate water, by replacing moist inside air by dryer outside air. However, opening greenhouse windows brings the danger of infection with or through flying insects, and results in losing almost all the irrigation water that the plant needs.

It is quite possible to leave the windows closed and cool the greenhouse with water, for instance ground water. This ground water then warms, and should be cooled back either at night or in winter, to be able to again receive the greenhouse heat when cooling is necessary. For this method, a heat pump is commonly used, as in air conditioning, fitted with standard plate-fin liquid-to-air heat exchangers. The heat pump can cool back the ground water and use the heat to heat green house at night and in winter. This saves fuel in case the greenhouse is fuel heated in these periods. The fuel savings are small, and the investment cost is high, so that without additional benefits or energy saving subsidies, this method is not economical feasible.

NL-A-9301439 describes a so-called fine wire heat exchanger. These fine wire heat exchangers can economically transfer heat from water to air or from air to water, when the temperature difference is only 3-5°C. More important, they do so using electrical energy amounting to only a few percent of the heat transferred. This means that a heat pump or cooling mechanism is not needed anymore, and energy savings are much improved. A substantial amount of the fuel generally used in heating can be saved. This is considered a breakthrough in climate control technology.

Current prior art fine wire heat exchangers, such as known from NL-C-1012114, comprise a Sirocco type radial fan enveloped by strips or mats of fabric made out of fine copper wires as warp and copper capillaries as weft, wherein each wire is soldered to each capillary in the strip or mat. All capillaries are connected to a water inlet manifold and to a water outlet manifold, which both have the form of toroidal tubes arranged around the fan.

For cooling greenhouses such fine wire heat exchangers can be placed under the plant layer such that they do not impede sunlight to shine on the plants. The cool air from the fine wire heat exchanger has to be directed vertically up, to break the inversion of warm air that floats on cool air in the greenhouse. There are however some disadvantages with these heat exchangers. It is rather difficult to control the water outlet temperature of several fine wire heat exchangers when used in combination. It is also difficult to control the water outlet temperature of different capillaries in one specific fine wire heat exchanger. An exact water temperature difference is however necessary for storage of the greenhouse heat underground. Therefore every fine wire heat exchanger needs a separate electronic device that controls the fan speed, so that the water inlet-to-outlet temperature difference is optimal. With the circular configuration of the known fine wire heat exchanger the inner capillaries have a higher heat flow from air than outside capillaries, so that even in one fine wire heat exchanger the problem rises of mixing water with different temperatures.

All prior art fine wire heat exchangers need a spiral casing, converting the radial/tangential air outflow to one direction to be able to control the air movements in the greenhouse. Drilling the large amount of holes with a drill to make reliable solder connections with all the capillary ends is a problem. The yield of leak tight holes must be a virtual 100%. The radial fans are of a special design and therefore high in costs when the production series are relatively small. Also the fan motor has to have a high torque at low rpm. Such fan motors are only available as ceiling fan motors having an vertically directed axis this complicates the shape of the fine wire heat exchange casing.

It is an object of the invention to provide an improved fine wire heat exchanger which does not have the above-mentioned disadvantages or at least is an improvement over the above-mentioned prior art fine wire heat exchangers.

This object is achieved by a heat exchanger according to the invention, which comprises:
- a housing having an gas inlet and an gas outlet;
- an elongate fluid inlet manifold and an elongate fluid outlet manifold interconnected by a plurality of tubes arranged in the housing in between the gas inlet and gas outlet;
- a wire mesh intertwined with the tubes; and
- driving means for driving the gas through the housing, wherein the main flow direction of the fluid is opposite to the main flow direction of the gas.

The heat exchanger according to the invention has the advantage that the inlet and outlet manifolds are much simpler and therefore can be manufactured against lower costs. Holes in the manifolds can be punched instead of being drilled due to the elongate shape of the manifolds. Also due to this elongate shape the water temperature differences in the several tubes is more even such that water temperature difference can be controlled much easier.

Due to the elongate structure counter flow is possible providing an increased efficiency.

In a preferred embodiment the driving means comprise an axial fan. Axial fans can easily be controlled in speed and are low in costs.

In another preferred embodiment the driving means are embodied by a vertical, chimney shaped housing in order to effect a natural draught.

Especially for using greenhouses a chimney like housing can be used. The air in greenhouses is at the top heated by direct sunlight falling onto the plants, while the air at the bottom is relatively cool. Due to the arrangement of the tubes inside the housing air present in the housing is cooled which draws in warm air at the top in order to be cooled which starts the natural draught effect.

In another embodiment of the heat exchanger according to the invention at least two combinations of an inlet manifold, an outlet manifold and interconnecting tubes are arranged behind each other, seen in flow direction of the gas. Preferably the manifolds are arranged in series and the main flow direction of the liquid is opposite to the flow direction of the gas. In this way the capacity of the heat exchanger can easily be increased. It is also possible to use part of the combinations to cool the air and then to use the remaining combinations for heating the air. The result is that the air is dried.

In yet another embodiment of the heat exchanger according to the invention the inlet and outlet manifold are straight and parallel.

A heat exchanger according to the invention further relates to a green house comprising:
- a floor;
- plants arranged near the floor and forming a plant canopy;
- a translucent roof such that sunlight can reach the plants; and
- a heat exchanger according to any of the preceding claims, wherein
either one of the gas inlet and gas outlet extends above the plant canopy and the other of the gas inlet and gas outlet extends beneath the plant canopy.

As already explained the fine wire heat exchanger according to the invention is of great use in greenhouses in which cooling and heating of the air is provided by heat exchangers. Especially a heat exchanger according to the invention has a high efficiency which provides savings on fuel.

In a preferred embodiment of the greenhouse according to the invention it comprises a heat buffer for storing and extracting heat, connected to the inlet and outlet manifold of the heat exchanger. Preferably this heat buffer comprises an aquifer or water bearing permeable ground layer. During the summer water from the aquifer or water bearing permeable ground layer can be used for cooling the air inside the greenhouse, while the warmed water is again stored into the aquifer or water bearing permeable ground layer. During winter the stored heat is again extracted from the aquifer or water bearing permeable ground layer used for heating the air inside the greenhouse.

The invention has the further details:
- the water headers are much simpler and lower in weight and cost;
- holes in the headers can be punched instead of drilled;
- the heat transfer between mats and air is much improved;
- the water temperature difference is much easier to control;
- the condensation of plant-evaporated water is much more efficient;
- the room taken up by the FWX mat array is much smaller;
- the fan motor control can be centralized;
- electronic measurement and control per fan is not needed anymore;
- the number of fans can be five times smaller;
- the power of the fans can be one third smaller;
- standard axial fans instead of costly special radial fans can be used;
- no spiral casing, no (two) 90 degree bend(s) in the airflow is (are) necessary;
- water piping in the greenhouse can be reduced by 50%;
- electrical cabling can be reduced by 50%;
- drying and heating functions of the FWX can be integrated.

These and other advantages of the invention will be elucidated in conjunction with the accompanying drawings.
Figure 1 shows an perspective view of an embodiment of an heat exchanger according to the invention.
Figure 2 shows an cross-sectional, schematic view of the heat exchanger according to figure 1.
Figure 3 shows a detailed view of a part of the heat exchanger according to figure 2.
Figures 4a and 4b show detailed views of figure 3.
Figure 5 shows a schematic cross-sectional view of a greenhouse according to the invention.

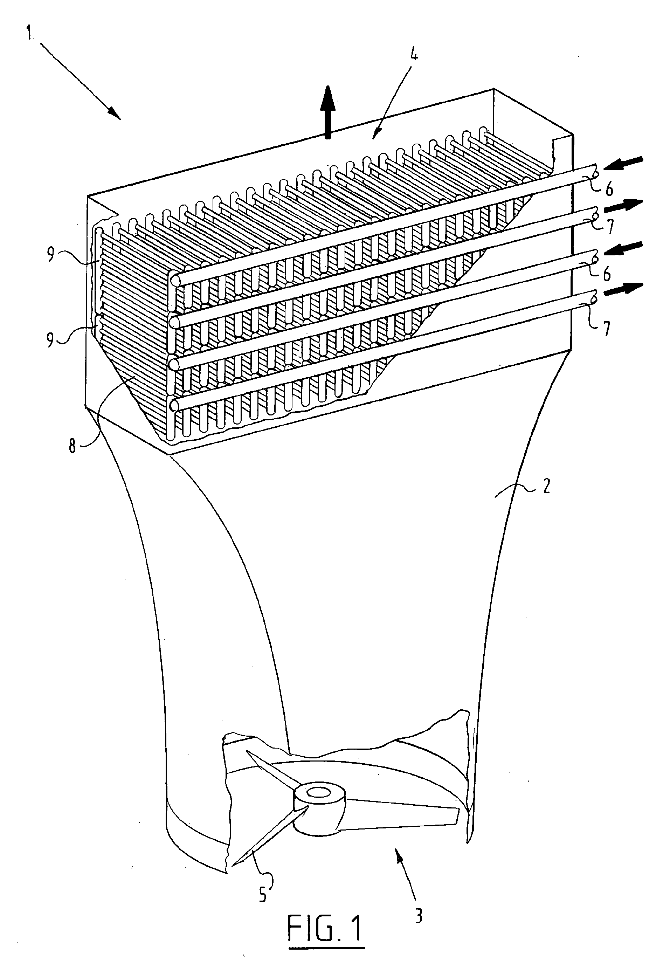

Figure 1 shows a heat exchanger 1 according to the invention. This heat exchanger 1 has a housing 2 with a gas inlet 3 and gas outlet 4. In the gas inlet 3 an axial fan 5 is arranged.

In the housing 2 two water inlet manifolds 6 are arranged. Also two water outlet manifolds 7 are present. Both inlet and outlet manifold 6, 7 are connected to a plurality of tubes 8, which extend through the housing 2 and exit the housing 2 at the opposite side. The tubes running from the inlet manifold 6 and running from the outlet manifold 7 are connected to an intermediate manifold 9 which functions as both an inlet and as an outlet manifold.

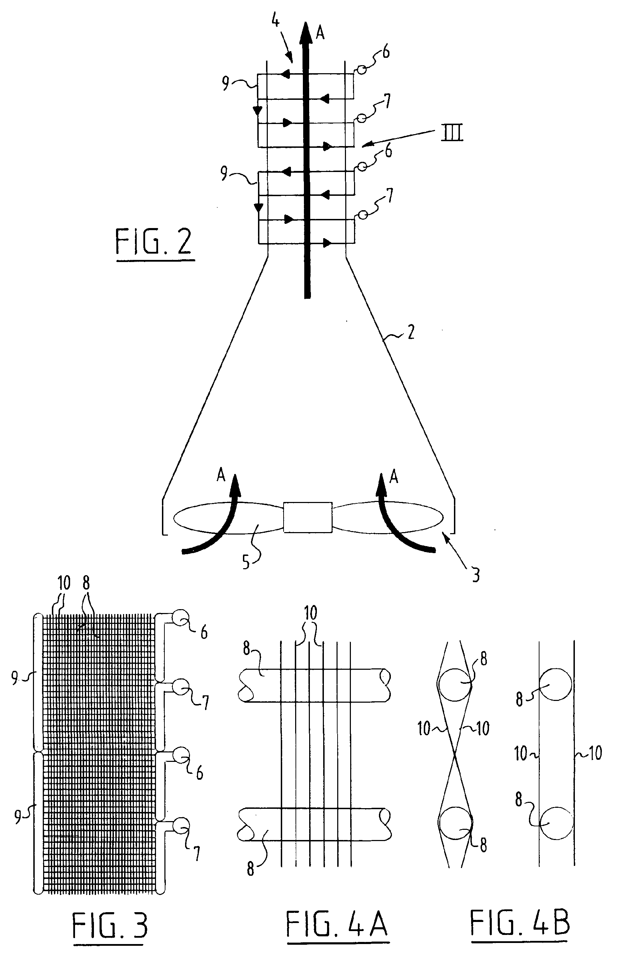

In figure 2 a schematic cross-section is shown of the heat exchanger 1 according to figure 1. In figure 2 it is clear how the air A is drawn into the housing 2 by the axial fan 5 through the gas inlet 3. The air A is than passed along the tubes 8 and exits the housing 2 at the gas outlet 4. The tubes 8 are connected to inlet manifolds 6 and outlet manifolds 7 and by intermediate manifolds 9. Water running through these tubes is heated by the air A and the air in its turn is cooled by the water.

Figure 3 in combination with figures 4a and 4b shows a detailed view of the construction of the inlet manifolds 6, outlet manifolds 7 and tubes 8. The tubes 8 are intertwined with fine wires 10. These fine wires 10 are preferably soldered to the tubes 8. Figure 4b shows two different cross-sections of the same tubes 8 in which the fine wires 10 alternate and in which the fine wires run both at a side of the tubes 8.

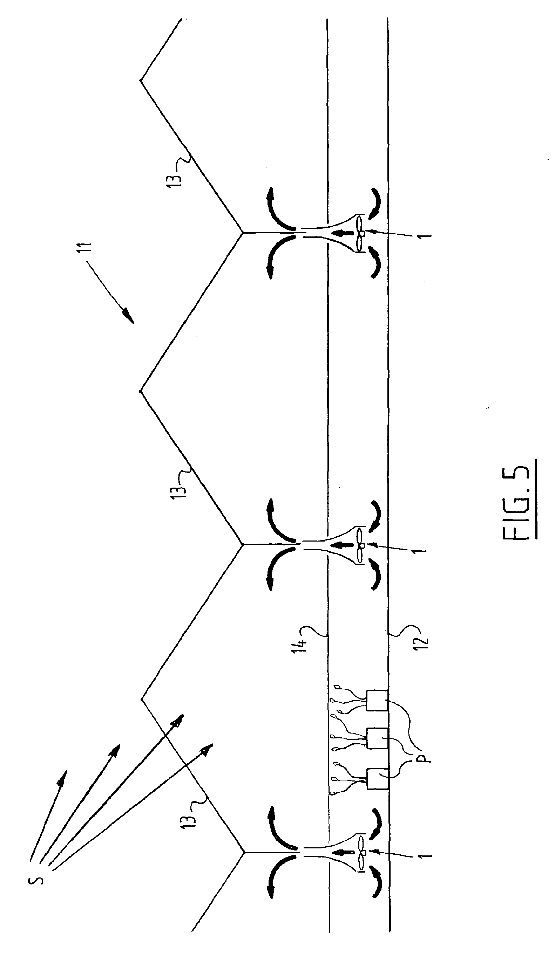

In figure 5 an embodiment of a greenhouse 11 according to the invention is shown. The greenhouse 11 has a floor 12 on which plants P are supported. Plants P provide a plant canopy 12. The greenhouse 11 has a translucent or preferably transparent roof 13 through which sunlight S can shine onto the plant canopy 12. In between the plants P heat exchangers 1 according to figure 1 are arranged. With these heat exchangers air from near the ground is sucked into the heat exchanger and cooled or warmed by the water running through the inlet manifold 6, tubes 8 and outlet manifold 7. The air is then blown into the top portion of the greenhouse 11. It is however also possible to use the heat exchanger without the fan 5 by providing a chimney like housing of which one end extends into the top portion of the greenhouse while the other end is adjacent to the floor 12. With such a housing a natural draught will occur saving energy for propelling a fan 5.

## Claims

1. Heat exchanger for exchanging heat between a fluid and a gas, in particular water and air, the heat exchanger comprising:
- a housing having an gas inlet and an gas outlet;
- an elongate fluid inlet manifold and an elongate fluid outlet manifold interconnected by a plurality of tubes arranged in the housing in between the gas inlet and gas outlet;
- a wire mesh intertwined with the tubes; and
- driving means for driving the gas through the housing, wherein the main flow direction of the fluid is opposite to the main flow direction of the gas.

2. Heat exchanger according to claim 1, wherein the driving means comprise an axial fan.

3. Heat exchanger according to claim 1 or 2, wherein the driving means are embodied by a vertical, chimney shaped housing in order to effect a natural draught.

4. Heat exchanger according to any of the preceding claims, wherein at least two combinations of an inlet manifold, an outlet manifold and interconnecting tubes are arranged behind each other, seen in flow direction of the gas.

5. Heat exchanger according to claim 4, wherein the manifolds are arranged in series and wherein the main flow direction of the liquid is opposite to the flow direction of the gas.

6. Heat exchanger according to any of the preceding claims, wherein the inlet and outlet manifold are straight and parallel.

7. Greenhouse comprising:
- a floor;
- plants arranged near the floor and forming a plant canopy;
- a translucent roof such that sunlight can reach the plants; and
- a heat exchanger according to any of the preceding claims, wherein
either one of the gas inlet and gas outlet extends above the plant canopy and the other of the gas inlet and gas outlet extends beneath the plant canopy.

8. Greenhouse according to claim 7, comprising a heat buffer for storing and extracting heat, connected to the inlet and outlet manifolds of the heat exchanger.

9. Greenhouse according to claim 8, wherein the heat buffer comprises an aquifer or water bearing permeable ground layer.
